# EUROPÄISCHE PATENTSCHRIFT

(11) **EP 2 071 957 B1**
(45) Veröffentlichungstag und Bekanntmachung des Hinweises auf die Patenterteilung: **27.03.2013**
(21) Anmeldenummer: 08021362.2
(22) Anmeldetag: 09.12.2008
(51) Int. Cl.: A22C 11/02, A22C 11/10

(54) **Darmhalteeinrichtung**
Casing holding device
Dispositif de retenue de boyaux

(30) Priorität: 19.12.2007 DE 102007061119
(43) Veröffentlichungstag der Anmeldung: 24.06.2009
(73) Patentinhaber: Heinrich Frey Maschinenbau GmbH, 89542 Herbrechtingen-Bolheim (DE)
(72) Erfinder: Frey, Heinrich, 89542 Herbrechtingen (DE)
(74) Vertreter: Manitz, Finsterwald & Partner GbR

(56) Entgegenhaltungen:
- EP-A- 1 260 143
- DE-U1- 8 806 038
- DE-U1- 29 517 333
- GB-A- 850 270

## Beschreibung

Die vorliegende Erfindung betrifft eine Darmhalteeinrichtung für eine Maschine zum portionierenden Abfüllen von pastösen Produkten, insbesondere von Wurstbrät in Natur- und Kunstdärme, mit einem an einem hinteren Ende beschickbaren drehbaren Füllrohr, auf das ein insbesondere geraffter Darm aufziehbar ist und das an seinem vorderen Ende eine Abgabeöffnung aufweist, einem langgestreckten, das Füllrohr umgebenden und insbesondere rohrförmigen Mitnahmeorgan, das mit dem Füllrohr drehstarr und lösbar gekoppelt ist, und einer Darmbremse, in die das Füllrohr mit seiner Abgabeöffnung mündet.

Sofern im Rahmen der vorliegenden Erfindung von "hinten", einem "hinterem Ende" oder dergleichen die Rede ist, so beziehen sich derartige Angaben auf einen in Bezug auf die Strömungsrichtung eines pastösen Produkts oberstromigen Bereich der Darmhalteeinrichtung. In entsprechender Weise beziehen sich die Angaben "vorne", "vorderes Ende" oder dergleichen auf einen in Strömungsrichtung unterstromigen Bereich der Darmhalteeinrichtung.

Bei der Herstellung von Wurststrängen wird der auf das Füllrohr aufgezogene Darm durch das aus der Abgabeöffnung des Füllrohrs austretende Produkt abgezogen und befüllt. Nach Abgabe einer vorgegebenen, einer Wurst entsprechenden Produktmenge wird der Darm dann abgedreht, woraufhin die nächste Wurst gebildet wird. Das Abdrehen kann durch Verdrehen der zuletzt gebildeten Wurst relativ zum Füllrohr oder durch Verdrehen des Füllrohrs relativ zu dem bereits gebildeten Wurststrang erfolgen, wobei sichergestellt werden muss, dass sich der auf das Füllrohr aufgezogene Darm mit dem Füllrohr mitdreht, damit eine die zwei aufeinander folgenden Würste trennende Darmabdrehung gebildet werden kann. Wenn zur Bildung einer Abdrehung das Füllrohr verdreht wird, kann sich die Darmbremse als nachteilig für ein ungestörtes Mitdrehen des Darmes erweisen. Deshalb wurde bereits vorgeschlagen, die Darmbremse aktiv mitzudrehen. Dies erfolgte über einen sich parallel versetzt zum Füllrohr erstreckenden Auslegerarm, wobei sich zwischen Darmbremse und Auslegerarm ein Stützarm erstreckt. In den Auslegerarm und den Stützarm war ein Antrieb für die Darmbremse integriert, der mit dem Drehantrieb für das Füllrohr synchronisiert war. Diese Lösung ist nicht nur konstruktiv aufwendig, sondern hat sich in der Praxis hinsichtlich einer zuverlässigen Darmmitnahme ebenfalls als nicht optimal herausgestellt.

Vorrichtungen, die für ein Mitdrehen des Darmes beim Verdrehen des Füllrohrs sorgen, sind außerdem bekannt aus der US 1,366,183 oder der DE-PS-190568. Ferner wird in der EP 1 260 143 A1 eine Darmhalteeinrichtung gemäß dem Oberbegriff des Anspruchs 1 beschrieben.

Es ist eine Aufgabe der vorliegenden Erfindung, ein Mitdrehen des Darmes auf möglichst einfache und zuverlässige Weise sicher zu stellen.

Die Lösung dieser Aufgabe erfolgt durch die Merkmale des Anspruchs 1 und insbesondere dadurch, dass das Mitnahmeorgan mit der Darmbremse drehstarr und lösbar gekoppelt ist.

Erfindungsgemäß wird somit vorgeschlagen, die Darmbremse mit Hilfe des ohnehin vorhandenen Mitnahmeorgans in Drehung zu versetzen, sodass der infolge des Befüllens von dem Füllrohr abgezogene Darm zusammen mit dem Füllrohr und der sich drehenden Darmbremse in Drehung versetzt wird. Auf einen separaten, über einen parallel versetzten Ausleger herangeführten Drehantrieb für die Darmbremse kann auf diese Weise verzichtet werden. Ferner wird erfindungsgemäß nicht mehr - wie in EP 1 260 143 A1 beschrieben - der auf das Füllrohr aufgezogene Darm mittels einer elastischen Haltekappe, die auf das vordere Ende des Halterohres aufgesteckt ist, beeinflusst, sondern es wird erfindungsgemäß eine drehfeste Verbindung zwischen dem Mitnahmeorgan und der Darmbremse hergestellt.

Bei dem Mitnahmeorgan kann es sich um ein das Füllrohr umgebendes Rohr handeln, welches insbesondere aus einem lichtdurchlässigen und vorzugsweise glasklaren Kunststoffmaterial gefertigt ist, wodurch der im Inneren dieses Mitnahmerohrs befindliche, auf das Füllrohr aufgezogene Darm optimal vor äußeren Einflüssen geschützt und das Innere des Mitnahmerohrs von außen einsehbar ist. Im Betrieb eventuell auftretende Probleme insbesondere beim Abziehen des Darms können somit frühzeitig erkannt werden.

Bevorzugte Ausführungsformen der erfindungsgemäßen Darmhalteeinrichtung ergeben sich aus den Unteransprüchen, der folgenden Beschreibung sowie den Zeichnungen.

So ist es gemäß einer Ausführungsform der erfindungsgemäßen Darmhalteeinrichtung vorgesehen, dass das Mitnahmeorgan und die Darmbremse ausgebildet sind, um zur Einstellung der Bremswirkung in Längsrichtung des Mitnahmeorgans unterschiedliche Relativstellungen zueinander einzunehmen. Anders ausgedrückt kann die Darmbremse also unterschiedliche axiale Stellungen bezüglich des Mitnahmeorgans einnehmen. Die relative Beweglichkeit zwischen dem Mitnahmeorgan und der Darmbremse erweist sich dabei dahingehend als vorteilhaft, dass dadurch das Spaltmaß bzw. die Spannung zwischen der Abgabeöffnung des Füllrohrs und der Darmbremse variiert werden kann, wodurch sich die Spannung des Darms beim Abziehen von dem Füllrohr gezielt einstellen lässt.

Gemäß einer bevorzugten Ausführungsform kann die Darmbremse in Längsrichtung des Mitnahmeorgans translatorisch verschiebbar sein. Alternativ dazu wäre es auch möglich, die Darmbremse und das Mitnahmeorgan über miteinander in Eingriff stehende Gewinde zu verschrauben, sodass durch ein Verdrehen der Darmbremse die Relativstellung derselben zu dem Mitnahmeorgan in Längsrichtung verändert werden kann.

Um die translatorische Verschiebbarkeit der Darmbremse an dem Mitnahmeorgan erreichen zu können, kann sowohl die Darmbremse als auch das Mitnahmeorgan eine Verzahnung, vorzugsweise eine Längsverzahnung, aufweisen, über die die Darmbremse und das Mitnahmeorgan drehstarr in Eingriff gebracht werden können. Die Darmbremse und das Mitnahmeorgan stehen somit über eine Kupplung in Form der genannten Längsverzahnungen in Eingriff, welche eine translatorische Einstellbewegung der Darmbremse in Längsrichtung des Mitnahmeorgans zulässt, eine Relativverdrehung der Darmbremse gegenüber dem Mitnahmeorgan jedoch in jeder Stellung verhindert.

Zwar wäre es grundsätzlich möglich, sowohl das Füllrohr als auch das Mitnahmeorgan an ihren jeweiligen vorderen Enden frei auskragen zu lassen, jedoch erweist es sich als vorteilhaft, die Darmbremse am vorderen Ende an einem stationären Stützglied der Darmhalteeinrichtung, vorzugsweise unter Zwischenlage eines Lagerkörpers, drehbar zu lagern. Eine ohnehin an bestehenden Maschinen vorgesehene Anordnung aus parallel versetztem Auslegerarm und Stützarm kann auf diese Weise zur Lagerung der Darmbremse genutzt werden.

Gemäß einer weiteren Ausführungsform ist es vorgesehen, einen Lagerkörper, über den die Darmbremse in dem Stützglied gelagert ist, mit dem Stützglied zu verschrauben, sodass über eine Verdrehung des Lagerkörpers die Darmbremse translatorisch in Längsrichtung des Mitnahmeorgans versetzt wird.

Insbesondere ist es dabei vorgesehen, dass der Lagerkörper ein Außengewinde und eine Aufnahme des Stützglieds, in der der Lagerkörper drehbar gelagert ist, ein mit dem Außengewinde korrespondierendes Innengewinde aufweist, in das der Lagerkörper zusammen mit der Darmbremse eingeschraubt werden kann. Die Darmbremse kann dabei insbesondere über ein Wälzlager, vorzugsweise über ein Kugellager, in dem Lagerkörper gelagert sein.

Um die Darmbremse möglichst einfach entnehmen zu können, kann das Wälzlager eine Aufnahmehülse tragen mit der die Darmbremse drehfest koppelbar ist. Zwar handelt es sich bei der Aufnahmehülse um ein von der eigentlichen Darmbremse separates Bauteil, jedoch kann die Aufnahmehülse als Bestandteil der Darmbremse angesehen werden, da sie sich zusammen mit der Darmbremse dreht.

Gemäß einer weiteren Ausführungsform wird erfindungsgemäß vorgeschlagen, die Darmbremse so auszubilden, dass diese zwei in axialer Richtung aufeinander folgende Trichterabschnitte aufweist, welche unterschiedliche Oberflächenbeschaffenheiten aufweisen. So kann beispielsweise an der Oberfläche des hinteren Trichterabschnitts eine Vielzahl von Graten oder Rippen ausgebildet sein, um gewissermaßen eine Verzahnung mit der Darmraupe zu erzielen. Die Darmraupe steht auf diese Weise mit dem Trichterabschnitt in Dreheingriffsverbindung und wird somit synchron mit der Drehung der Darmbremse mitgedreht.

Um den unterschiedlichen Anforderungen, die an die beiden Trichterabschnitte gestellt werden, einfacher gerecht werden zu können, können die beiden Trichterabschnitte in zwei separaten Bauteilen ausgebildet sein, welche zusammen zumindest einen Teil der Darmbremse bilden und vorzugsweise aus unterschiedlichen Materialien gefertigt sind. So kann beispielsweise das Bauteil der Darmbremse mit dem hinteren Trichterabschnitt aus einem Kunststoffmaterial, z. B. aus PTFE, gefertigt sein, wohingegen das Bauteil mit dem vorderen Trichterabschnitt aus Edelstahl gefertigt sein kann. Auf diese Weise kann durch die Auswahl entsprechend geeigneter Materialien die mechanische Wechselwirkung zwischen dem Darm und dem jeweiligen Bauteil gezielt eingestellt werden. Die Zweiteiligkeit des Trichters erweist sich ferner dadurch als vorteilhaft, dass hierdurch unterschiedliche Trichterbauteile miteinander kombiniert werden können.

Im Folgenden wird die Erfindung rein exemplarisch anhand beispielhafter Ausführungsformen unter Bezugnahme auf die beigefügten Zeichnungen beschrieben, wobei:
- Fig. 1: eine teilweise geschnittene Draufsicht auf eine Darmhalte- einrichtung gemäß einer Ausführungsform der Erfindung zeigt;
- Fig. 2: eine Schnittdarstellung einer anderen Ausführungsform einer erfindungsgemäßen Darmhalteeinrichtung im Bereich der Darmbremse zeigt; und
- Fig. 3: einen Ausschnitt einer Darmhalteeinrichtung gemäß Fig. 2 in einer perspektivischen Darstellung zeigt.

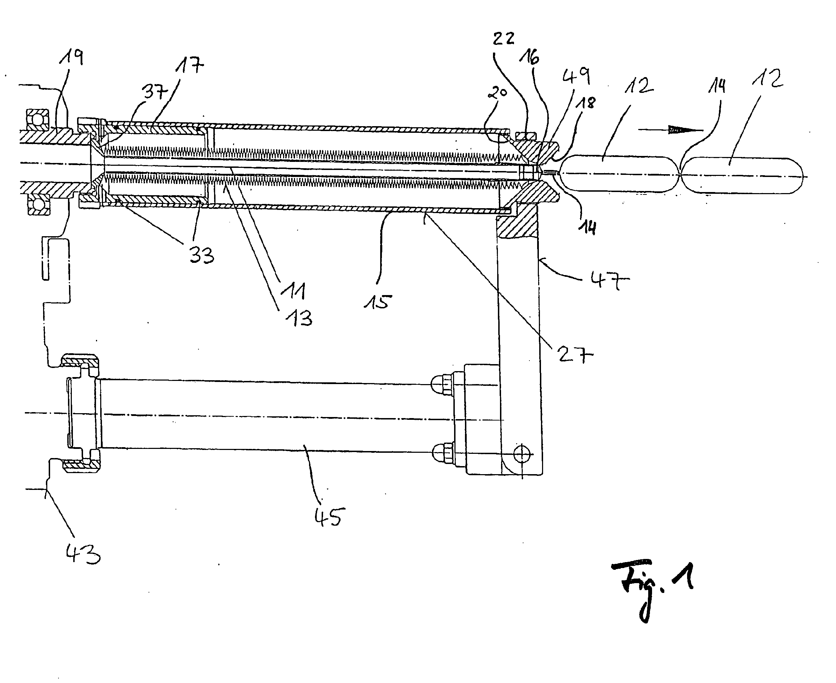

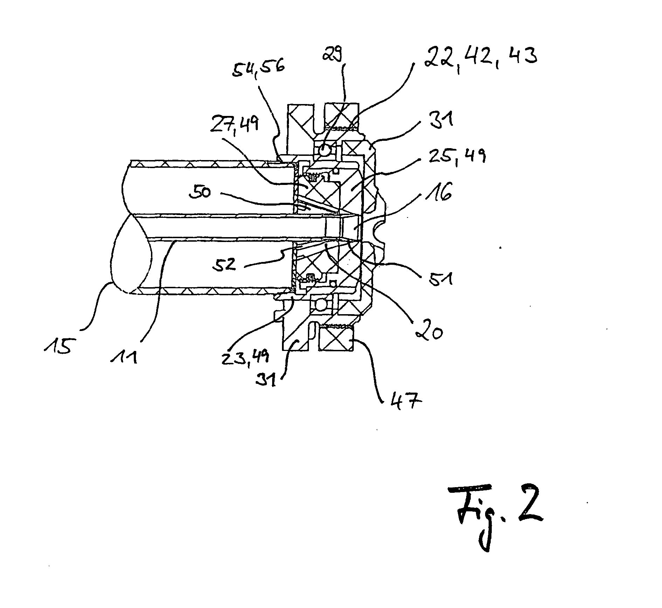

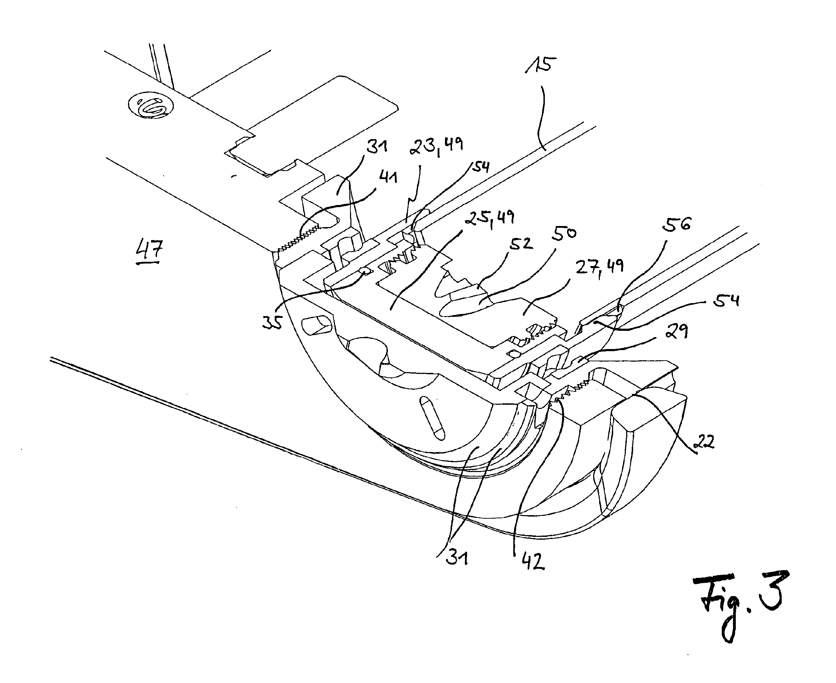

Im Folgenden wird zunächst unter Bezugnahme auf die Fig. 1 lediglich der grundsätzliche Aufbau der erfindungsgemäßen Darmhalteeinrichtung erläutert, woraufhin dann anhand von Fig. 2 und 3 ein bevorzugtes Ausführungsbeispiel für den Aufbau im Bereich der Darmbremse beschrieben wird. Die Darmhalteeinrichtung ist an einem Abdrehgetriebe 43 einer nicht dargestellten Füllmaschine angeordnet, mit der Wurstbrät in Natur- oder Kunstdärme abgefüllt werden kann, um Wurststränge zu bilden.

Über einen Drehantrieb in Form einer Antriebswelle 19 des Abdrehgetriebes 43 kann ein Füllrohr 11 in Drehung versetzt werden. Das Füllrohr 11 weist an seinem hinteren Ende einen Einfülltrichter 37 auf, über den es mit Wurstbrät beschickt wird. Mit seinem vorderen, eine Abgabeöffnung 16 aufweisenden Ende ist das Füllrohr 11 in einer Darmbremse 49 gelagert, in der ein Trichter 20 ausgebildet ist. Die Abgabeöffnung 16 kann dabei durch einen auf das Füllrohr 11 aufgeschobenen, elastischen Rohrabschnitt gebildet werden, welcher wie eine Dichtlippe an der Oberfläche des Trichters 20 ansteht bzw. mit der Oberfläche des Trichters 20 einen Ringspalt für den Darm bildet.

Parallel versetzt zu dem Füllrohr 11 erstreckt sich ein an dem Abdrehgetriebe 43 angebrachter Auslegerarm 45, der ein schwenkbares, in einer Stützstellung senkrecht zu dem Auslegerarm 45 verlaufendes Stützglied 47 trägt. Das Stützglied 47 weist an seinem frei auskragenden Ende eine ringförmige Aufnahme 22 auf, in der die Darmbremse 49 drehbar gelagert ist.

Das Füllrohr 11 ist von einem langgestreckten rohrförmigen Mitnahmeorgan 15 umgeben. Das Mitnahmeorgan 15 ist dabei auf einen rohrförmigen Antriebsabschnitt 17 mit seinem hinteren Ende aufgeschoben, mit dem es über zwei O-Ringe 33 in reibschlüssiger Verbindung steht. Während die Länge des Antriebabschnitts 17 weniger als ein Drittel der Länge des Füllrohrs 11 beträgt, ist das rohrförmige Mitnahmeorgan 15 nur wenig kürzer als das Füllrohr 11, welches sich im dargestellten montierten Zustand mit seiner Abgabeöffnung 16 bis in den Trichter 20 hinein erstreckt. Der rohrförmige Antriebsabschnitt 17 ist seinerseits mit dem freien Ende der Antriebswelle 19 verschraubt. Der Antriebsabschnitt 17 wirkt dabei mit einem radial nach innen vorstehenden Klemmflansch mit dem Füllrohr 11 in der Art einer Überwurfmutter derart zusammen, dass das Füllrohr 11 über seinen trichterförmigen Einfüllbereich 37 zwischen dem Klemmflansch und der Stirnseite der Antriebswelle 19 eingeklemmt ist. Der Antriebsabschnitt 17 des Mitnahmeorgans 15 dient somit als Befestigungsmittel für das Füllrohr 11.

Das aus einem transparenten Kunststoffmaterial hergestellte und eine geschlossene, d.h. durchbrechungsfreie Mantelfläche aufweisende rohrförmige Mitnahmeorgan 15 ist in der voran beschriebenen Art und Weise unter Zwischenlage der O-Ringe 33 auf den Antriebsabschnitt 17 aufgesteckt, um eine sichere Mitnahme des Mitnahmeorgans 15 bei sich drehendem Antriebsabschnitt 17 zu gewährleisten.

Im Betrieb der Füllmaschine wird bei stillstehendem Füllrohr 11 Wurstbrät über den Einfülltrichter 37 in das Füllrohr 11 gedrückt. Das aus der Ausgabeöffnung 16 des Füllrohrs 11 austretende Wurstbrät zieht dabei den Darm 13 von dem Füllrohr 11 ab, wodurch eine Wurst 12 gebildet wird. Nach Abgabe einer vorgegebenen Brätmenge wird dann ein Abdrehvorgang durchgeführt, um die gefüllte Wurst 12 zu verschließen und anschließend mit dem Füllen der nächsten Wurst beginnen zu können. In der Fig. 1 sind zwei bereits hergestellte Würste 12 dargestellt, die beide bereits durch eine Darmabdrehung 14 voneinander getrennt und verschlossen wurden.

Zum Erzeugen der Darmabdrehung 14 wird die Brätförderung gestoppt und die Antriebswelle 19 des Abdrehgetriebes 43 in Drehung versetzt, wodurch der Antriebsabschnitt 17 und das von diesem an der Antriebswelle 19 festgeklemmte Füllrohr 11 synchron mitgedreht werden. Durch die reibschlüssige Verbindung des Mitnahmeorgans 15 über die O-Ringe 33 mit dem Antriebsabschnitt 17 wird ein synchrones Mitdrehen des Mitnahmeorgans 15 gewährleistet. Das Mitnahmeorgan 15 wiederum ist drehfest mit der Darmbremse 49 gekoppelt. Hierdurch wird erreicht, dass sich bei einer Drehung des Füllrohres 11 zur Bildung von Abdrehungen die Darmbremse 49 synchron mitdreht. Hierdurch ist wiederum eine zuverlässige synchrone Mitnahme des auf das Füllrohr 11 aufgezogenen Darmes 13 sichergestellt. Dies ermöglicht schließlich die zuverlässige Herstellung von eindeutig definierten Abdrehungen 14.

Im Folgenden wird nun eine zweite Ausbildung einer erfindungsgemäßen Darmbremseinrichtung unter Bezugnahme auf die Fig. 2 und 3 beschrieben.

Im Unterschied zu der in der Fig. 1 dargestellten Ausführungsform ist bei der in den Fig. 2 und 3 dargestellten Ausführungsform die hier mehrteilig ausgebildete Darmbremse 49 nicht direkt in der Aufnahme 22 des Stützglieds 47 gelagert; vielmehr ist die Darmbremse 49 ihrerseits über einen Kugellagerring 29 in einem mehrteiligen Lagerkörper 31 gelagert, welcher seinerseits in die Aufnahme 22 des Stützglieds 47 eingeschraubt ist. Hierzu weist der Lagerkörper 31 ein Außengewinde 41 auf, wohingegen die Aufnahme 22 ein mit dem Außengewinde 41 korrespondierendes Innengewinde 42 aufweist, in das der Lagerkörper 31 zusammen mit der von ihm gelagerten Darmbremse 49 eingeschraubt ist. Durch entsprechendes Ein- bzw. Ausschrauben des Lagerkörpers 31 in bzw. aus der Aufnahme 22 wird die Darmbremse 49 translatorisch in Längsrichtung des rohrförmigen Mitnahmeorgans 15 verschoben, wodurch sich gezielt der Ringspalt bzw. die Spannung in dem Ringspalt zwischen der Abgabeöffnung 16 des Füllrohres 11 und der Darmbremse 49 und damit die Spannung des Darms 13 beim Befüllen mit Wurstbrät einstellen lässt.

In der dargestellten Ausführungsform ist die Darmbremse 49 mehrteilig ausgebildet und setzt sich aus einer Aufnahmehülse 23, einem vorderen Trichterbauteil 25 und einem hinteren Trichterbauteil 27 zusammen, welche konzentrisch zueinander angeordnet sind. Die Aufnahmehülse 23 weist eine abgestufte rohrförmige Gestalt auf und wird direkt von dem Kugellagerring 29 getragen. Die Aufnahmehülse 23 nimmt ihrerseits das vordere Trichterbauteil 25 auf, welches in die Aufnahmehülse 23 unter Zwischenlage eines O-Rings 35 eingesteckt und darin reibschlüssig gesichert ist. Alternativ oder zusätzlich können die Aufnahmehülse 23 und das vordere Trichterbauteil 25 formschlüssig drehfest gekoppelt sein, indem beispielsweise ein am Innenumfang der Aufnahmehülse 23 ausgebildeter Nocken in eine korrespondierende Ausnehmung in dem vorderen Trichterbauteil 25 eingreift (nicht dargestellt). Das hintere Trichterbauteil 27 ist wiederum mit dem vorderen Trichterbauteil 25 lösbar verbunden. Hierzu weist das hintere Trichterbauteil 27 ein Außengewinde auf, wohingegen das vordere Trichterbauteil 25 ein entsprechendes Innengewinde aufweist, in das das hintere Trichterbauteil 27 eingeschraubt ist.

Um die Drehbewegung des Mitnahmeorgans 15 auf die Darmbremse 49 übertragen zu können, weist die rohrförmige Aufnahmehülse 23 in einem hinteren Bereich eine umlaufende innenliegende Längsverzahnung 54 auf, welche mit einer dazu korrespondierenden Längsverzahnung 56, welche an einem vorderen Bereich des Mitnahmeorgans 15 ausgebildet ist, in Eingriff steht, sodass die Darmbremse 49 über ihre Aufnahmehülse 23 drehstarr mit dem Mitnahmeorgan 15 verbunden ist. Die Längsverzahnungen 54, 56 stellen somit eine Kupplung zwischen dem Mitnahmeorgan 15 und der Aufnahmehülse 23 dar, welche eine Relativdrehung der Aufnahmehülse 23 und des Mitnahmeorgans 15 verhindert, jedoch eine translatorische Längsverschiebung dieser beiden Teile zueinander zulässt, sodass die Darmbremse 49 infolge des Ein- oder Ausschraubens des Lagerkörpers 31 in die Aufnahme 22 des Stützglieds 47 in Längsrichtung des Mitnahmeorgans 15 verschoben werden kann.

Das hintere Trichterbauteil 27 weist einen Trichterabschnitt 50 auf, an dessen Oberfläche mehrere Grate oder Rippen 52 ausgebildet sind. Wie der Fig. 2 entnommen werden kann, schließt sich an den Trichterabschnitt 50 des hinteren Trichterbauteils 27 ein Trichterabschnitt 51 an, der in dem vorderen Trichterbauteil 25 ausgebildet ist, sodass die beiden Trichterabschnitte 50, 51 einen durchgehenden Trichter 20 bilden.

Während das Füllrohr 11 im Bereich seiner Abgabeöffnung 16 mit dem vorderen Trichterabschnitt 51 zusammenwirkt, dient der mit den Graten bzw. Rippen 52 versehene hintere Trichterabschnitt 50 dazu, mit der in Fig. 2 und 3 nicht dargestellten, auf das Füllrohr 11 aufgezogenen Darmraupe zusammenzuwirken. Hierdurch wird mittels der erfindungsgemäßen Darmbremse 49 auf den Darm an zwei in axialer Richtung beabstandeten Stellen eingewirkt.

### Bezugszeichenliste

- 11: Füllrohr
- 12: Wurst
- 13: Darm / Darmraupe
- 14: Abdrehung
- 15: Mitnahmeorgan
- 16: Abgabeöffnung von 11
- 17: Antriebsabschnitt
- 18: vorderer Trichter von 49
- 19: Drehantrieb / Antriebswelle
- 20: Trichter von 49
- 22: Aufnahme in 47
- 23: Aufnahmehülse
- 25: vorderes Trichterbauteil
- 27: hinteres Trichterbauteil
- 29: Kugellagerring
- 31: Lagerkörper
- 33: O-Ring
- 35: O-Ring
- 37: Einfüllbereich
- 41: Außengewinde an 31
- 42: Innengewinde in 22
- 43: Abdrehgetriebe
- 45: Auslegerarm
- 47: Stützglied
- 49: Darmbremse
- 50: Trichterabschnitt von 27
- 51: Trichterabschnitt von 25
- 52: Grate, Rippen
- 54: Längsverzahnung in 23
- 56: Längsverzahnung in 15

## Patentansprüche

1. Darmhalteeinrichtung für eine Maschine zum portionierenden Abfüllen von pastösen Produkten, insbesondere von Wurstbrät in Natur- und Kunstdärme, mit
- einem an einem hinteren Ende beschickbaren drehbaren Füllrohr (11), auf das ein insbesondere geraffter Darm (13) aufziehbar ist und das an seinem vorderen Ende eine Abgabeöffnung (16) aufweist,
- einem langgestreckten, das Füllrohr (11) umgebenden und insbesondere rohrförmigen Mitnahmeorgan (15), das mit dem Füllrohr (11) drehstarr und lösbar gekoppelt ist, und
- einer Darmbremse (49), in die das Füllrohr (11) mit seiner Abgabeöffnung (16) mündet,
**dadurch gekennzeichnet, dass**
das Mitnahmeorgan (15) mit der Darmbremse (49) drehstarr und lösbar gekoppelt ist.

2. Darmhalteeinrichtung nach Anspruch 1,
**dadurch gekennzeichnet, dass**
das Mitnahmeorgan (15) und die Darmbremse (49) ausgebildet sind, um zur Einstellung der Bremswirkung in Längsrichtung des Mitnahmeorgans (15) unterschiedliche Relativstellungen zueinander einzunehmen.

3. Darmhalteeinrichtung nach Anspruch 1 oder 2,
**dadurch gekennzeichnet, dass**
die Darmbremse (49) in Längsrichtung des Mitnahmeorgans (15) verschiebbar ist.

4. Darmhalteeinrichtung nach zumindest einem der vorstehenden Ansprüche,
**dadurch gekennzeichnet, dass**
sowohl die Darmbremse (49) als auch das Mitnahmeorgan (15) eine Verzahnung (54, 56), vorzugsweise eine Längsverzahnung, aufweisen, über die die Darmbremse (49) und das Mitnahmeorgan (15) drehstarr miteinander in Eingriff stehen.

5. Darmhalteeinrichtung nach zumindest einem der vorstehenden Ansprüche,
**dadurch gekennzeichnet, dass**
für die Darmbremse (49) ein stationäres Stützglied (47) mit einer Aufnahme (22) vorgesehen ist, in der die Darmbremse (49) drehbar gelagert ist.

6. Darmhalteeinrichtung nach einem der vorhergehenden Ansprüche, **dadurch gekennzeichnet, dass**
ein Lagerkörper (31) ein Außengewinde (41) und die Aufnahme (22) ein zu dem Außengewinde (41) korrespondierendes Innengewinde (42) aufweist, wobei der Lagerkörper (31) zusammen mit der Darmbremse (49) über sein Außengewinde (41) bezüglich der Aufnahme (22) ein- und ausschraubbar ist.

7. Darmhalteeinrichtung nach Anspruch 6,
**dadurch gekennzeichnet, dass**
die Darmbremse (49) über ein Wälzlager, vorzugsweise über ein Kugellager (29), in dem Lagerkörper (31) gelagert ist.

8. Darmhalteeinrichtung nach Anspruch 7,
**dadurch gekennzeichnet, dass**
das Wälzlager (29) eine Aufnahmehülse (23) trägt, mit der die Darmbremse (49) drehstarr koppelbar ist.

9. Darmhalteeinrichtung nach zumindest einem der vorstehenden Ansprüche,
**dadurch gekennzeichnet, dass**
die Darmbremse (49) zwei in axialer Richtung aufeinander folgende Trichterabschnitte (50, 51) aufweist, welche unterschiedliche Oberflächenbeschaffenheiten aufweisen.

10. Darmhalteeinrichtung nach Anspruch 9,
**dadurch gekennzeichnet, dass**
an der Oberfläche des hinteren Trichterabschnitts (50) eine Darmmitnahmestruktur ausgebildet ist, die insbesondere eine Vielzahl von sich in Längsrichtung des Trichterabschnitts (50) erstreckenden Graten oder Rippen (52) aufweist.

11. Darmhalteeinrichtung nach Anspruch 9 oder 10,
**dadurch gekennzeichnet, dass**
die zwei Trichterabschnitte (50, 51) in zwei separaten Bauteilen (27, 25) ausgebildet sind, welche zusammen zumindest einen Teil der Darmbremse (49) bilden.

12. Darmhalteeinrichtung nach Anspruch 11,
**dadurch gekennzeichnet, dass**
die zwei Bauteile (27, 25) der Darmbremse (49) lösbar miteinander verbunden und insbesondere miteinander verschraubt sind.

13. Darmhalteeinrichtung nach Anspruch 11 oder 12,
**dadurch gekennzeichnet, dass**
das Bauteil (27) mit dem hinteren Trichterabschnitt (50) aus einem Kunststoffmaterial gefertigt ist.

14. Darmhalteeinrichtung nach zumindest einem der Ansprüche 11 bis 13,
**dadurch gekennzeichnet, dass**
das Füllrohr (11) mit seiner Abgabeöffnung (16) in den vorderen Trichterabschnitt (51) mündet.

15. Darmhalteeinrichtung nach zumindest einem der vorstehenden Ansprüche,
**dadurch gekennzeichnet, dass**
dass das Mitnahmeorgan (15) über einen hinteren Abschnitt zusammen mit dem Füllrohr (11) verdrehbar ist, und/oder dass das Füllrohr (11) und das Mitnahmeorgan (15) mit einem gemeinsamen Drehantrieb (19) verbunden sind.

## Claims

1. A casing holding apparatus for a machine for the portioned filling of pasty products, in particular of sausage meat in natural and artificial casings, comprising
- a rotatable filling tube (11) chargeable at a rear end onto which filling tube an in particular gathered casing (13) can be drawn and which has a dispensing opening (16) at its front end;
- an elongate entrainment element (15), in particular of tubular shape, which surrounds the filling tube (11) and which is coupled to the filling tube (11) in a torsionally stiff and releasable manner; and
- a casing brake (49) into which the dispensing opening (16) of the
filling tube (11) opens;
**characterized in that**
the entrainment element (15) is coupled to the casing brake (49) in a torsionally stiff and releasable manner.

2. A casing holding apparatus in accordance with claim 1, **characterized in that**
the entrainment element (15) and the casing brake (49) are designed to take up different relative positions with regard to one another for the setting of the braking effect in the longitudinal direction of the entrainment element (15).

3. A casing holding apparatus in accordance with claim 1 or claim 2, **characterized in that**
the casing brake (49) can be displaced in the longitudinal direction of the entrainment element (15)

4. A casing holding apparatus in accordance with at least one of the preceding claims,
**characterized in that**
both the casing brake (49) as well as the entrainment element (15) have a toothing (54, 56), preferably a longitudinal toothing, via which toothing the casing brake (49) and the entrainment element (15) are engaged in a torsionally stiff manner.

5. A casing holding apparatus in accordance with at least one of the preceding claims,
**characterized in that**
a stationary support element (47) having a receiver (22) is provided for the casing brake (49) in which receiver the casing brake (49) is rotationally stored.

6. A casing holding apparatus in accordance with any one of the preceding claims,
**characterized in that**
a bearing body (31) has an outer thread (41) and the receiver (22) has an inner thread (42) corresponding to the outer thread (41), wherein the bearing body (31) can be screwed in and screwed out with respect to the receiver (22) via its outer thread (41) together with the casing brake (49).

7. A casing holding apparatus in accordance with claim 6, **characterized in that**
the casing brake (49) is stored in the bearing body (31) by means of a roller bearing, preferably by means of a ball bearing (29).

8. A casing holding apparatus in accordance with claim 7, **characterized in that**
the roller bearing (29) bears a reception sleeve (23) by means of which the casing brake (49) can be coupled in a torsionally stiff manner.

9. A casing holding apparatus in accordance with at least one of the preceding claims,
**characterized in that**
the casing brake (49) has two funnel sections (50, 51) which follow one another in the axial direction and which have different surface properties.

10. A casing holding apparatus in accordance with claim 9, **characterized in that**
a casing entrainment structure is formed at the surface of the rear funnel section (50) which casing entrainment structure in particular has a plurality of ridges or ribs (52) extending in the longitudinal direction of the funnel section (50).

11. A casing holding apparatus in accordance with claim 9 or claim 10, **characterized in that**
the two funnel sections (50, 51) are formed in two separate components (27, 25) which together form at least one part of the casing brake (49).

12. A casing holding apparatus in accordance with claim 11, **characterized in that**
the two components (27, 25) of the casing brake (49) are connected to one another in a releasable manner and are in particular screwed to one another.

13. A casing holding apparatus in accordance with claim 11 or claim 12, **characterized in that**
the component (27) having the rear funnel section (50) is made from a plastic material.

14. A casing holding apparatus in accordance with at least one of the claims 11 to 13,
**characterized in that**
the dispensing opening (16) of the filling tube (11) opens into the forward funnel section (51).

15. A casing holding apparatus in accordance with at least one of the preceding claims,
**characterized in that**
the entrainment element (15) can be rotated via a rear section together with the filling tube (11), and / or **in that** the filling tube (11) and the entrainment element (15) are connected to a common rotary drive (19).

## Revendications

1. Dispositif de maintien de boyau pour une machine destinée au remplissage par portions de produits pâteux, en particulier de chair à saucisse dans des boyaux naturels et artificiels, comprenant
- un tube de remplissage rotatif (11) susceptible d'être alimenté à l'extrémité postérieure, sur lequel il est possible d'enfiler un boyau (13), en particulier de manière froncée, et qui comporte à son extrémité antérieure une ouverture de distribution (16),
- un organe d'entraînement (15) allongé, qui entoure le tube de remplissage (11) et est en particulier de forme tubulaire, qui est accouplé solidairement en rotation avec le tube de remplissage (11), de manière détachable, et
- un frein à boyau (49) dans lequel débouche le tube de remplissage (11) avec son ouverture de distribution (16),
**caractérisé en ce que** l'organe d'entraînement (15) est accouplé solidairement en rotation avec le frein à boyau (49) de manière détachable.

2. Dispositif de maintien de boyau selon la revendication 1,
**caractérisé en ce que** l'organe d'entraînement (15) et le frein à boyau (49) sont réalisés, pour le réglage de l'effet de freinage, de manière à occuper des positions relatives différentes l'un par rapport à l'autre en direction longitudinale de l'organe d'entraînement (15).

3. Dispositif de maintien de boyau selon la revendication 1 ou 2, **caractérisé en ce que** le frein à boyau (49) est déplaçable en direction longitudinale de l'organe d'entraînement (15).

4. Dispositif de maintien de boyau selon l'une au moins des revendications précédentes,
**caractérisé en ce que** le frein à boyau (49) tout comme l'organe d'entraînement (15) comporte une denture (54, 56), de préférence une denture longitudinale au moyen de laquelle le frein à boyau (49) et
l'organe d'entraînement (15) sont engagés solidairement en rotation l'un avec l'autre.

5. Dispositif de maintien de boyau selon l'une au moins des revendications précédentes,
**caractérisé en ce qu'**il est prévu pour le frein à boyau (49) un organe de soutien stationnaire (47) avec un récepteur (22) dans lequel le frein à boyau (49) est logé avec possibilité de rotation.

6. Dispositif de maintien de boyau selon l'une au moins des revendications précédentes,
**caractérisé en ce qu'**un corps de montage (31) comporte un pas de vis extérieur (41) et le récepteur (22) comporte un pas de vis intérieur (42) correspondant au pas de vis extérieur (41), le corps de montage (31) pouvant être vissé et dévissé ensemble avec le frein à boyau (49) par rapport au récepteur (22) via son pas de vis extérieur (41).

7. Dispositif de maintien de boyau selon la revendication 6,
**caractérisé en ce que** le frein à boyau (49) est monté dans le corps de montage (31) au moyen d'un palier à roulements, de préférence au moyen d'un palier à billes (29).

8. Dispositif de maintien de boyau selon la revendication 7,
**caractérisé en ce que** le palier à roulements (29) porte une douille de réception (23) avec laquelle le frein à boyau (49) peut être accouplé solidairement en rotation.

9. Dispositif de maintien de boyau selon l'une au moins des revendications précédentes,
**caractérisé en ce que** le frein à boyau (49) comporte deux tronçons en entonnoir (50, 51) qui se suivent mutuellement en direction axiale et qui présentent des propriétés de surface différentes.

10. Dispositif de maintien de boyau selon la revendication 9, **caractérisé en ce que** sur la surface du tronçon en entonnoir postérieur (50) est réalisée une structure d'entraînement de boyau qui comporte en particulier une pluralité de bavures ou de nervures (52) s'étendant en direction longitudinale du tronçon en entonnoir (50).

11. Dispositif de maintien de boyau selon la revendication 9 ou 10, **caractérisé en ce que** les deux tronçons en entonnoir (50, 51) sont réalisés dans deux composants séparés (27, 25) qui forment ensemble au moins une partie du frein à boyau (49).

12. Dispositif de maintien de boyau selon la revendication 11, **caractérisé en ce que** les deux composants (27, 25) du frein à boyau (49) sont reliés de façon détachable l'un à l'autre et sont en particulier vissés l'un avec l'autre.

13. Dispositif de maintien de boyau selon la revendication 11 ou 12, **caractérisé en ce que** le composant (27) avec le tronçon en entonnoir postérieur (50) est fabriqué en matière plastique.

14. Dispositif de maintien de boyau selon l'une au moins des revendications 11 à 13,
**caractérisé en ce que** le tube de remplissage (11) débouche avec son ouverture de distribution (16) dans le tronçon en entonnoir antérieur (51).

15. Dispositif de maintien de boyau selon l'une au moins des revendications précédentes,
**caractérisé en ce que** l'organe d'entraînement (15) est susceptible d'être mis en rotation via un tronçon postérieur conjointement avec le tube de remplissage (11), et/ou **en ce que** le tube de remplissage (11) et l'organe d'entraînement (15) sont reliés avec un entraînement de rotation commun (19).
